# FASCICULE DE BREVET EUROPEEN

(11) **EP 0 861 978 B1**
(45) Date de publication et mention de la délivrance du brevet: **20.08.2003**
(21) Numéro de dépôt: 98400382.2
(22) Date de dépôt: 18.02.1998
(51) Int. Cl.: F02K 1/76, F02K 1/70

(54) **Inverseur de poussée de turboréacteur à portes associées à un dispositif de synchronisation de commande**
Schubumkehrvorrichtung mit synchronisierten Klappenstellantrieben
Thrust reverser with synchronized flap actuators

(30) Priorité: 27.02.1997 FR 9702329
(43) Date de publication de la demande: 02.09.1998
(73) Titulaire: HUREL-HISPANO LE HAVRE, 76700 Harfleur (FR)
(72) Inventeur: Baudu, Pierre André Marcel, 76280 - Criquetot L'Esneval (FR); Rouyer, Pascal Gérard, 76430 Saint Aubin Routot (FR); Gonidec, Patrick, 76290 Montivilliers (FR); Vauchel, Guy Bernard, 76610 Le Havre (FR)
(74) Mandataire: Berrou, Paul

(56) Documents cités:
- WO-A-86/00862
- DE-A- 3 337 868
- US-A- 3 500 646
- US-A- 3 724 759
- "Schubumkehr bei Bläsertriebwerken" LUFTFAHRTTECHNIK.RAUMFAHRTTECHNIK., vol. 15, no. 12, décembre 1969, DUSSELDORF DE, pages 317-318, XP002045835

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

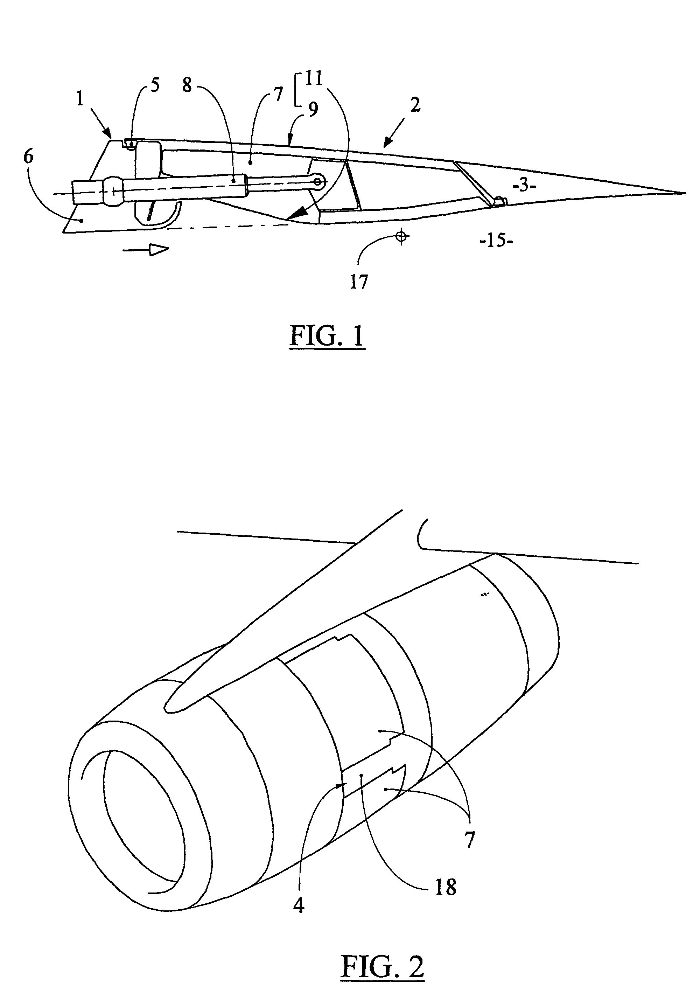

La figure 1 des dessins joints montre un exemple connu de réalisation d'un inverseur de poussée de ce type, appliqué comme le montre la vue schématique en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur, en amont des portes, par une partie amont 1 puis en aval des portes, par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots 17, vient obstruer plus ou moins totalement le conduit 15, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Des exemples connus de réalisation sont illustrés par exemple par FR 1 482 538, par FR-A-2 030 034 , par US-A-3724759 ou par US 3.605.411.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.
Le système de commande pour un inverseur a habituellement une source de puissance hydraulique et est généralement constitué d'un bloc de commande commun, d'un vérin par élément mobile, de signalisation de position et, selon les règles de sécurité en vigueur pour les inverseurs, de plusieurs verrouillages redondants, appelés aussi lignes de défense, pour éviter tout déploiement intempestif des éléments mobiles tels que les portes.

Ces lignes de défense sont réalisées par des systèmes de verrouillage mécanique mis en action par différents modes de puissance connus. On rencontre généralement trois lignes de défense. La première ligne est constituée d'un verrou en amont de l'élément mobile. Ce verrou communément appelé verrou primaire retient et positionne ledit élément mobile en mode jet direct.

La seconde ligne peut être intégrée au vérin de manoeuvre de porte. Le rôle de cette deuxième ligne est de retenir les éléments mobiles d'inversion lorsque le verrou primaire ne remplit plus sa fonction de maintien. Elle peut être réalisée par des griffes qui ne sont pas sollicitées en phase de fonctionnement normal du système. Son gros défaut est qu'en raison de leur implantation à l'intérieur du corps du vérin, il n'est pas possible de détecter une rupture d'une d'elles, dès lors on se retrouve avec une panne cachée.

Une troisième ligne peut être activée par une source de puissance différente de celle des deux premières lignes. Elle peut être placée en parties latérales des éléments d'inversion. Son action est du même ordre que celle de la seconde ligne, c'est à dire qu'elle est passive, sans contact physique avec l'élément de verrouillage et l'élément mobile, en configuration de vol normale.

Ces systèmes ont l'inconvénient de nécessiter de nombreux éléments coûteux car de qualité de réalisation irréprochable et dont certains ne sont pas contrôlables sans intervention directe sur le produit. Parallèlement, l'accroissement du nombre de pièces mobiles est un facteur dégradant la fiabilité globale du système.

La mise en oeuvre de tous les éléments du système requiert une alimentation hydraulique spécifique pour chaque composant multipliant le nombre de liaisons et l'étendue du cheminement de tuyauterie. Ceci implique un risque accru de fuite du liquide hydraulique fortement corrosif rendant de plus la maintenance délicate.

Un des buts de l'invention est de remplacer un des verrouillages connus rappelés ci-dessus, notamment le dispositif intégré au vérin de manoeuvre de porte constituant la seconde ligne de défense tout en conservant une sécurité équivalente de fonctionnement et en améliorant la fiabilité sans risque de panne dormante. Un autre but de l'invention est d'éviter les inconvénients des solutions connues antérieures, notamment ceux qui sont liés à l'utilisation d'une source de puissance hydraulique.

Ces buts sont atteints conformément à l'invention grâce à un inverseur de poussée de turboréacteur caractérisé en ce que au moins deux vérins de commande des déplacements de porte sont associés à un dispositif de synchronisation placé dans la poutre et constitué par un moteur électrique et son système électronique de puissance et un boîtier de renvoi relié respectivement par un lien de transmission à chaque vérin qui est dépourvu de système de verrouillage interne, de manière que en cas de non-verrouillage d'une porte, le dispositif de synchronisation de la porte voisine retient ladite porte non-verrouillée grâce au lien de transmission et en outre, le dispositif a un jeu mécanique suffisamment réduit pour conserver l'étanchéité de la porte en jet direct.

Ces dispositions permettent en cas de non-verrouillage d'une porte de la retenir au moyen du dispositif de synchronisation de la porte voisine, assurant ainsi la sécurité de fonctionnement en constituant des lignes de défense.

D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermée, d'un type connu et qui a fait précédemment l'objet d'une description ;
- la figure 2 représente une vue schématique en perspective d'une nacelle comportant un inverseur de poussée du type précité montré en position monté et avec les portes fermées ;
- la figure 3 représente une vue schématique en perspective d'un mode de réalisation de l'invention ;
- la figure 4 représente une demi-section dans l'axe de la nacelle en arrière du cadre avant, en position portes fermées, le cadre avant n'étant pas représenté ;
- la figure 5 représente une vue schématique en perspective d'un demi-inverseur selon un autre mode de réalisation de l'invention ;
- la figure 6 représente une vue de face de l'inverseur suivant un mode de réalisation de l'invention.

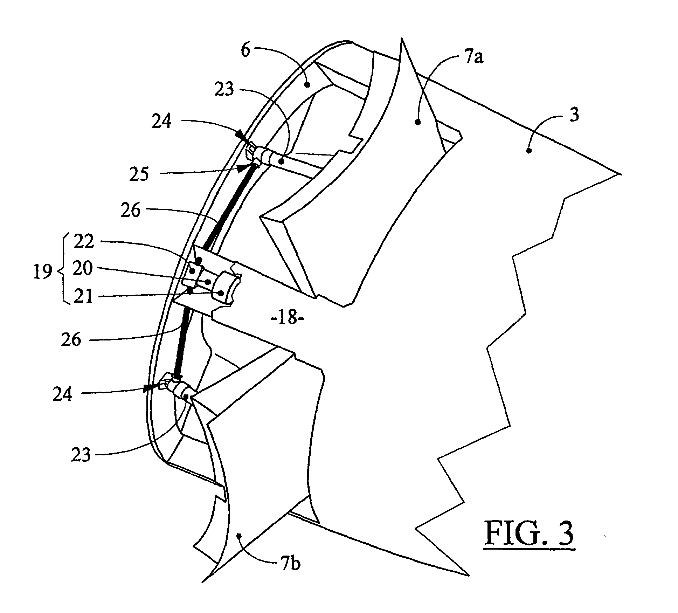

La figure 3 représente une disposition particulière d'un mode de réalisation de l'invention. Un moteur électrique 20 situé dans la poutre 18, pouvant comporter son système électronique de puissance 21 associé à sa structure, est assujetti à un boîtier de renvoi d'angle 22 pouvant de plus faire office de démultiplication. L'ensemble est relié rigidement à la structure principale de la poutre 18 en arrière du cadre avant 6. L'ensemble 19 peut participer au renforcement structural de la zone avant de la poutre 18. Une trappe d'accès sur la structure externe de la nacelle peut être ajoutée pour faciliter la maintenance du système.
Deux actionneurs mécaniques 23 ou vérin d'entraînement de portes sont placés de part et d'autre de la poutre 18 préférentiellement dans l'axe des portes 7a et 7b. Ces actionneurs 23 sont articulés sur des ferrures 24 assujetties au cadre 6.
Pour permettre une maintenance aisée, chaque actionneur peut comporter un débrayage permettant la manoeuvre individuelle des portes. Une jonction 25 permet de relier l'entraînement de la mécanique de l'actionneur 23 au boîtier de renvoi d'angle 22 du moteur 20 par l'intermédiaire d'un câble de transmission flexible 26 de type connu.

Un câble de transmission flexible est avantageusement adapté lorsque la jonction 25 se trouve en position non alignée avec le pivot de l'actionneur 23 pour compenser le débattement angulaire pendant la phase de manoeuvre de la porte.
Dans le cas où la jonction 25 peut se trouver alignée avec le pivot de l'actionneur il peut être envisagé d'utiliser un arbre de transmission de couple rigide par exemple cannelé pour réaliser la liaison entre l'élément meneur et les éléments menés.
Un axe rigide peut éventuellement être utilisé dans le cas d'une jonction 25 se trouvant décalée du pivot du vérin 23. Le déplacement angulaire du vérin étant faible et la distance de la jonction au pivot étant réduite, le débattement résultant est modeste et peut être absorbé en laissant par exemple l'ensemble 19 suivre le déplacement angulaire de l'axe. Il est également possible d'utiliser un joint homocinétique et, bien sûr, tout autre liaison élastique peut être appliquée par l'homme de métier.

Un inverseur à portes à coins coupés peut recevoir l'installation de l'ensemble moteur 19 ou une partie dans l'un des caissons amont supérieur ou inférieur de la structure fixe 1.

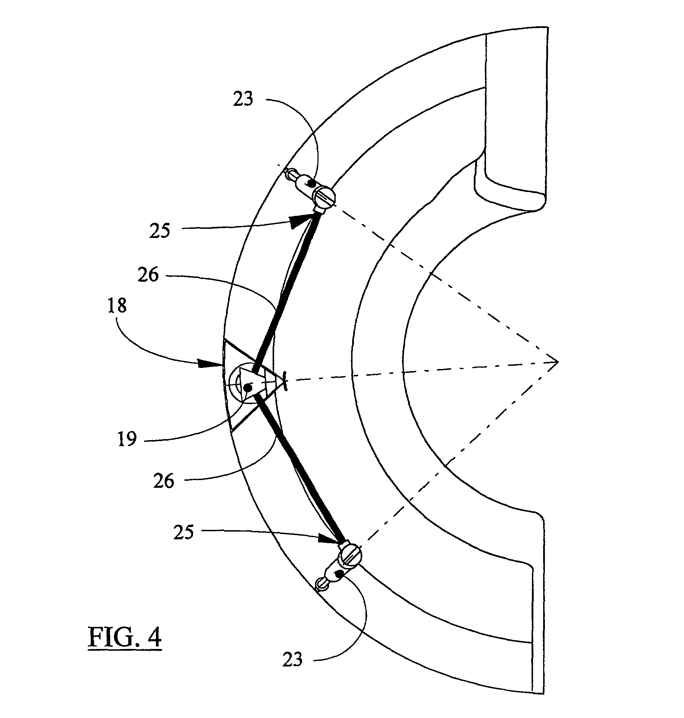

Comme on peut le comprendre sur la figure 4 l'entraînement d'une porte 7a est intimement lié à celui de l'autre porte 7b par ce dispositif. Dans le cas d'une rupture d'un organe de verrouillage d'un des éléments mobiles 7 la synchronisation rend impossible l'ouverture non désirée dudit élément mobile impacté et, malgré le rattrapage de jeu que comporte tout système mécanique, la porte 7 conserve son étanchéité car son déplacement est très faible, ce qui minimise les pertes aérodynamiques. Cette réalisation remarquable permet de ne plus utiliser de verrouillage secondaire généralement situé dans le vérin et donc d'améliorer la fiabilité de l'ensemble en éliminant le problème de panne dormante non décelable liée à l'emplacement des organes secondaires de verrouillage dans le corps du vérin.

Comme déja expliqué, avantageusement le vérin 23 peut être positionné dans l'axe central de la porte. Une autre disposition permettant de réduire encore le nombre de composants et donc d'améliorer plus encore la fiabilité et la masse est de placer les vérins 23 en sortie directe du boîtier de renvoi d'angle 22. Ceux-ci se trouvant alors positionnés de part et d'autre de la poutre 18 entre les flancs latéraux de portes 7 et ladite poutre elle-même.

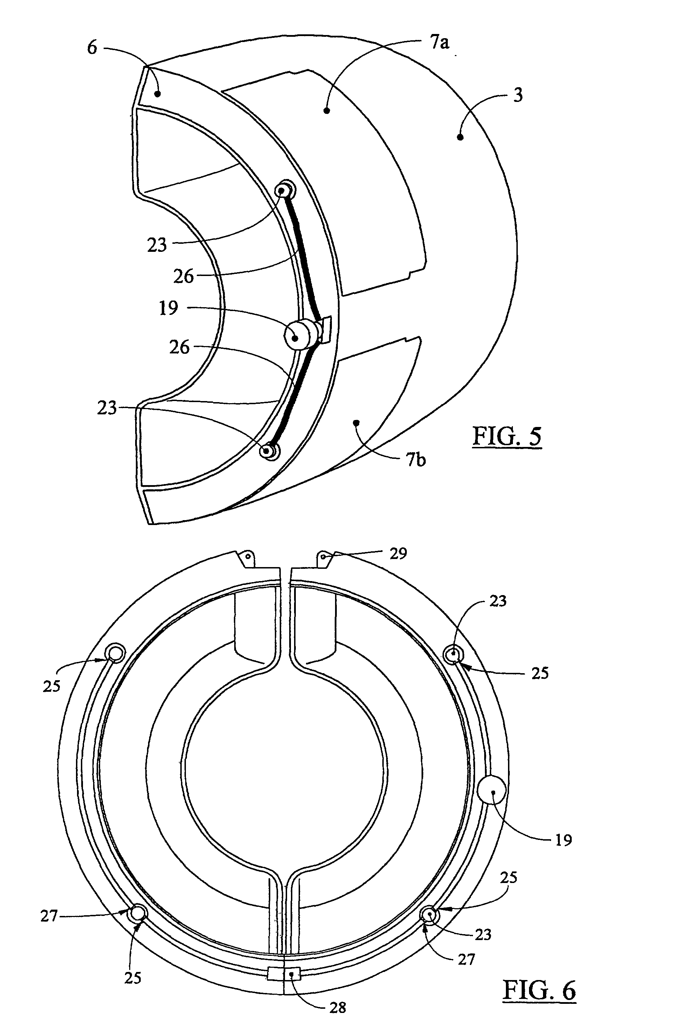

La figure 3 propose une disposition du dispositif de synchronisation de commande conforme à l'invention à l'arrière du cadre. Une application à l'avant du cadre peut aussi être envisagée comme selon la figure 5. L'actionneur 23 de porte 7 traverse le cadre 6 comme dans le cas d'un inverseur à portes de type connu et qui a fait précédemment l'objet d'une description.
L'ensemble moteur 19 est placé sur le cadre 6 à tout endroit jugé pertinent par l'homme de métier. Le boîtier électronique 21 peut être dissocié et disposé dans l'environnement du moteur. L'ensemble 19 peut intégralement être installé sur le cadre ou avoir une partie de sa structure intégrée dans la structure fixe 1 de l'inverseur et traverse le cadre 6.

FR-A-2.712.929 propose un entraînement de porte par l'aval de la porte pour lequel cette disposition est aussi applicable.

Les exemples montrés sont appliqués à un inverseur comprenant quatre portes. Le dispositif peut néanmoins s'appliquer pour un inverseur double flux associé à n'importe quel nombre de portes supérieur à deux. Il peut également être utilisé avec succès sur un inverseur à grilles ou sur un inverseur à obstacles aval, en association avec les vérins de commande des déplacements d'éléments mobiles de l'inverseur.

Un seul ensemble moteur 19 peut être utilisé pour un nombre de portes supérieur à deux par demi-côté d'inverseur. Sur un inverseur comprenant plus de deux portes par demi-côté, cet ensemble moteur 19 est positionné préférentiellement entre deux actionneurs 23. L'actionneur 23 qui se trouve dans le cheminement intermédiaire de la ligne de synchronisation comporte une jonction 25 d'entrée et une jonction 27 de sortie de renvoi vers l'actionneur suivant, comme schématiquement représenté sur la figure 6.

Il peut être avantageux de n'utiliser qu'un seul dispositif de synchronisation pour tout l'inverseur. Dan ce cas, les organes de transmissions relient les quatre actionneurs ensemble. Ceci augmente l'effet de synchronisation sur quatre vérins synchrones au lieu de deux, donc la redondance du système. Dans une telle éventualité le moteur peut avantageusement être situé au voisinage de la poutre située en position dite 12 heures, voire au dessus. Il se trouve alors protégé de l'éclatement de disque moteur par la poutre et le pylône de montage sur l'avion.

La figure 6 représente un exemple d'application d'un seul ensemble moteur 19 pour tous les actionneurs 23 d'un inverseur. La technologie de raccordement entre ensemble moteur 19 et actionneur et entre actionneurs eux-mêmes est de type déjà défini précédemment. Dans le cas d'un inverseur en deux parties manoeuvrables autour des points d'attache 29, un ensemble de connexion automatique 28 peut être placé à l'interface inférieure des deux structures. Cet ensemble 28 comporte un système de liaison de type connu de l'homme de métier et peut intégrer un détrompeur de position pour interdire la prise en charge de l'élément mené par l'élément meneur si l'une ou l'autre des structures se trouve dans une position différente de portes. Une autre solution consiste à placer une transmission à travers la poutre 12H et le pylône.

## Revendications

1. Inverseur de poussée de turboréacteur à double flux comportant au moins deux portes pivotantes (7, 7a, 7b) séparées par une poutre (18) de structure fixe, susceptibles en position fermée, lors d'un fonctionnement en jet direct de s'intégrer dans la paroi extérieure du conduit (15) de flux en arrière de la soufflante de turboréacteur, et susceptibles en outre chacune de pivoter sous l'action d'un vérin (23) de commande des déplacements de manière à constituer des obstacles de déviation de flux lors d'un fonctionnement en inversion de poussée **caractérisé en ce que** au moins deux vérins (23) sont associés à un dispositif de synchronisation (19) placé dans ladite poutre (18) et constitué par un moteur électrique (20) et son système électronique de puissance (21) et un boîtier de renvoi (22) relié respectivement par un lien de transmission (26) à chaque vérin (23) qui est dépourvu de système de verrouillage interne, de manière que en cas de non-verrouillage d'une porte (7), le dispositif de synchronisation de la porte voisine (7) retient ladite porte (7) non-verrouillée grâce au lien de transmission (26) et en outre, le dispositif a un jeu mécanique suffisamment réduit pour conserver l'étanchéité de la porte en jet direct.

2. Inverseur de poussée de turboréacteur selon la revendication 1 **caractérisé en ce que** le dispositif de synchronisation (19) est placé à l'arrière d'un cadre amont (6) faisant partie de la structure fixe amont de l'inverseur.

3. Inverseur de poussée de turboréacteur selon l'une des revendications 1 ou 2 **caractérisé en ce que** ledit lien de transmission est constitué par un câble flexible (26).

4. Inverseur de poussée de turboréacteur selon l'une quelconque des revendications 1 à 3 **caractérisé en ce que** ledit lien de transmission est constitué par un arbre rigide.

5. Inverseur de poussée de turboréacteur selon l'une quelconque des revendications 1 à 3 **caractérisé en ce que** les vérins (23) sont disposés de part et d'autre de la poutre fixe (18), entre un flanc latéral de porte (7a, 7b) et la poutre (18), la liaison entre vérins (23) et boîtier de renvoi (22) étant réduite.

6. Inverseur de poussée de turboréacteur selon l'une quelconque des revendications 1 et 3 à 5, **caractérisé en ce que** le dispositif de synchronisation (19) est placé du côté amont d'un cadre amont (6) faisant partie de la structure fixe amont de l'inverseur, les vérins (23) traversant ledit cadre amont (6).

7. Inverseur de poussée de turboréacteur selon la revendication 1 **caractérisé en ce qu'**un dispositif unique (19) assure la synchronisation de plus de deux vérins (23), chaque vérin intermédiaire (23) comportant une jonction d'entrée (25) et une jonction de sortie (27) de renvoi vers le vérin suivant (23) dans la ligne de synchronisation.

8. Inverseur de poussée de turboréacteur selon la revendication 7 **caractérisé en ce que** l'inverseur est en deux parties et le dispositif de synchronisation comporte un ensemble de connexion automatique (28) placé à une interface des deux demi-structures.

9. Inverseur de poussée de turboréacteur selon l'une quelconque des revendications 1 à 8 **caractérisé en ce que** chaque vérin (23) comporte un dispositif de débrayage permettant une manoeuvre individuelle de porte.

## Patentansprüche

1. Schubumkehrvorrichtung für Zweikreis-TL-Triebwerke, die mindestens zwei Schwenkklappen (7, 7a, 7b) aufweist, die durch einen Holm (18) des festen Aufbaus getrennt werden und geeignet sind, sich in Schließstellung im Direktstrahlbetrieb in die Außenwand der Strömungsleitung (15) hinter dem Gebläse des Turbotriebwerks einzufügen, sowie ferner jeweils geeignet sind, unter Einwirkung eines Steuerzylinders (23) für die Bewegungen dergestalt zu schwenken, dass sie im Umkehrschubbetrieb Strömungs-Umlenkhindernisse bilden,
**dadurch gekennzeichnet,**
**dass** mindestens zwei Zylinder (23) einer Synchronisierungsvorrichtung (19) zugeordnet sind, die in diesem Holm (18) sitzt und durch einen Elektromotor (20) mit seinem elektronischen Leistungssystem (21) sowie ein Umlaufgehäuse (22) gebildet ist, das mit jedem Zylinder (23), der nicht mit einem internen Verriegelungssystem versehen ist, durch ein Übertragungsmittel (26) verbunden ist, so dass im Falle eines Nicht-Verriegelns einer Klappe (7) die Synchronisierungsvorrichtung der nächsten Klappe (7) diese nicht verriegelte Klappe (7) mit Hilfe des Übertragungsmittels (26) festhält, und ferner die Vorrichtung ein ausreichend geringes mechanisches Spiel hat, dass die Dichtigkeit der Klappe im Direktstrahlbetrieb erhalten bleibt.

2. Schubumkehrvorrichtung nach Anspruch 1,
**dadurch gekennzeichnet,**
**dass** die Synchronisierungsvorrichtung (19) hinter einem vorderen Rahmen (6) angeordnet ist, der Teil des vorderen festen Aufbaus der Schubumkehrvorrichtung ist.

3. Schubumkehrvorrichtung nach einem der Ansprüche 1 oder 2,
**dadurch gekennzeichnet,**
**dass** dieses Übertragungsmittel von einem biegsamen Kabel (26) gebildet wird.

4. Schubumkehrvorrichtung nach einem der Ansprüche 1 bis 3,
**dadurch gekennzeichnet,**
**dass** dieses Übertragungsmittel von einer starren Welle gebildet wird.

5. Schubumkehrvorrichtung nach einem der Ansprüche 1 bis 3,
**dadurch gekennzeichnet,**
**dass** die Zylinder (23) beiderseits des festen Holms (18) zwischen einer Seitenflanke der Klappe (7a, 7b) und dem Holm (18) angeordnet sind, wobei die Verbindung zwischen Zylindern (23) und Umlaufgehäuse (22) reduziert ist.

6. Schubumkehrvorrichtung nach einem der Ansprüche 1 und 3 bis 5,
**dadurch gekennzeichnet,**
**dass** die Synchronisierungsvorrichtung (19) an der Vorderseite eines vorderen Rahmens (6) angeordnet ist, der Teil des vorderen festen Aufbaus der Schubumkehrvorrichtung ist, wobei die Zylinder (23) sich durch diesen vorderen Rahmen (6) erstrecken.

7. Schubumkehrvorrichtung nach Anspruch 1,
**dadurch gekennzeichnet,**
**dass** eine einzige Synchronisierungsvorrichtung (19) die Synchronisation von mehr als zwei Zylindern (23) gewährleistet, wobei jeder Zwischenzylinder (23) eine Eingangsverbindung (25) und eine Ausgangsverbindung (27) zum nächsten Zylinder (23) in der Synchronisierungsreihe aufweist.

8. Schubumkehrvorrichtung nach Anspruch 7,
**dadurch gekennzeichnet,**
**dass** sie in zwei Teilen ausgeführt ist und die Synchronisierungsvorrichtung (19) ein automatisches Verbindungssystem (28) enthält, das an einer Grenzfläche der beiden Halbaufbauten angeordnet ist.

9. Schubumkehrvorrichtung nach einem der Ansprüche 1 bis 8,
**dadurch gekennzeichnet,**
**dass** jeder Zylinder (23) eine Vorrichtung zum Entkuppeln aufweist, die eine individuelle Klappensteuerung ermöglicht.

## Claims

1. Bypass turbojet thrust reverser comprising at least two pivoting doors (7, 7a, 7b) separated by a fixed structure beam (18) and able, in a closed position, during operation in direct jet mode, to become incorporated into the outer wall of the flow duct (15) behind the turbojet fan, and also each able to pivot under the action of a motion-control ram (23) in such a way as to form obstacles deflecting the flow during operation in reverse thrust mode, **characterized in that** at least two rams (23) are associated with a synchronizing device (19) placed in the said beam (18) and consisting of an electric motor (20) and of its power electronics system (21) and of a transmission box (22) connected respectively by a transmission line (26) to each ram (23) which has no internal locking system so that should a door (7) fail to lock, the synchronizing device of the adjacent door (7) holds the said unlocked door (7) by virtue of the transmission line (26), and furthermore, the device has a sufficiently small amount of mechanical clearance that the door remains sealed in the direct jet mode.

2. Turbojet thrust reverser according to Claim 1, **characterized in that** the synchronizing device (19) is placed behind an upstream frame (6) forming part of the upstream fixed structure of the reverser.

3. Turbojet thrust reverser according to either of Claims 1 and 2, **characterized in that** the said transmission line consists of a flexible cable (26).

4. Turbojet thrust reverser according to any one of Claims 1 to 3, **characterized in that** the said transmission line consists of a rigid shaft.

5. Turbojet thrust reverser according to any one of Claims 1 to 3, **characterized in that** the rams (23) are arranged on each side of the fixed beam (18), between a lateral door flank (7a, 7b) and the beam (18), the connection between rams (23) and transmission box (22) being reduced.

6. Turbojet thrust reverser according to any one of Claims 1 and 3 to 5, **characterized in that** the synchronizing device (19) is placed on the upstream side of an upstream frame (6) forming part of the fixed upstream structure of the reverser, the rams (23) passing through the said upstream frame (6).

7. Turbojet thrust reverser according to Claim 1, **characterized in that** a single device (19) synchronizes more than two rams (23), each intermediate ram (23) having an input connection (25) and an output connection (27) for transmission to the next ram (23) in the synchronizing sequence.

8. Turbojet thrust reverser according to Claim 7, **characterized in that** the reverser is made in two parts and the synchronizing device comprises an automatic connection assembly (28) placed at an interface between the two half-structures.

9. Turbojet thrust reverser according to any one of Claims 1 to 8, **characterized in that** each ram (23) comprises a declutching device allowing the doors to be operated individually.
